# EUROPEAN PATENT APPLICATION

(11) **EP 4 815 247 A1**
(43) Date of publication of application: **30.09.2026**
(21) Application number: 24892636.2
(22) Date of filing: 28.03.2024
(51) Int. Cl.: H02J 7/00, H01M 10/44

(54) **CHARGING AND DISCHARGING METHOD FOR ENERGY STORAGE**

(30) Priority: 20.11.2023 CN 202311550902
(71) Applicant: Meizhou Jiangnan Electric Appliance Co., Ltd., Meizhou, Guangdong 514000 (CN)
(72) Inventor: CHEN, Zhifeng, Meizhou, Guangdong 514000 (CN); CHEN, Ting, Meizhou, Guangdong 514000 (CN); CHEN, Chao, Meizhou, Guangdong 514000 (CN); LI, Shulan, Meizhou, Guangdong 514000 (CN); LI, Wanmin, Meizhou, Guangdong 514000 (CN)
(74) Representative: Cabinet Chaillot
(86) International application number: PCT/CN2024/084415
(87) International publication number: WO 2025/107469

(57) **Abstract**

A charging and discharging method for energy storage, relating to the technical field of new energy. The method comprises the following steps: (1) setting up a hardware system; (2) carrying out initialization detection to ensure that each hardware device is in a normal state; (3) setting up a software system; and (4) during standby or working, a controller reading battery parameters of each measurement and control board in turn and comparing set data to make corresponding actions. The charging and discharging method for energy storage has the advantages of simple and convenient wiring, low cost, and easy maintenance.

## Description

### Technical Field

The invention belongs to the technical field of a charging and discharging method, and more specifically, in particular to a charging and discharging method for energy storage.

### Background Art

Currently, mainstream battery charging and discharging technologies rely solely on primary battery protection. This protection depends on command transmission via communication lines; if these lines experience interference, or if detecting components or the system fail, it can lead to battery damage or major accidents, indicating a lack of sufficient safety. Furthermore, existing battery charging and discharging technologies require a high degree of battery consistency to prevent a significant "bottleneck effect". Even with high initial consistency, this effect tends to worsen over time, preventing healthy batteries from being fully charged or discharged. Simultaneously, current battery charging and discharging technologies suffer from system complexity: they demand extremely high standards for BMS (Battery Management System) data collection reliability, State of Charge (SOC) estimation accuracy, thermal management, cell balancing, and safety management of the battery; these systems involve intricate wiring and are difficult to maintain, as troubleshooting is complex, and BMS requires professional personnel to operate and maintain, which significantly increases overall operational costs.

### Summary of the Invention

The purpose of this invention is to address the shortcomings of the prior art by providing a charging and discharging method for energy storage that is simple to wire, low in cost, and easy to maintain.

The technical solution of this invention is implemented as follows: a charging and discharging method for energy storage, comprising the following steps:
(1) setting up a hardware system
① installing a measurement and control board on each battery to directly detect the corresponding battery's voltage and temperature;
② installing an automatic switching element and a bypass circuit that works in conjunction with each battery on a main line between two adjacent batteries;
③ connecting communication lines of each measurement and control board in parallel, and then connecting them to a controller, the controller is connected to an inverter;
(2) carrying out initialization detection to ensure that each hardware device is in a normal state;
(3) setting up a software system
(a) setting an address code of the measurement and control board as the identification number for the corresponding battery;
(b) setting parameters for the measurement and control board: maximum temperature, maximum voltage, and minimum voltage during battery operation; the measurement and control board reads relevant battery parameters and compares them with set data to make corresponding actions; during operation, the measurement and control board has bypass permissions only, with no connection permissions;
(c) setting controller software parameters: AC parameters, DC parameters, maximum temperature, maximum voltage, and minimum voltage during battery warnings, as well as maximum temperature, maximum voltage, and minimum voltage during battery faults;
(4) during standby or working, the controller reads battery parameters of each measurement and control board in turn and compares set data to make corresponding actions;
in a charging mode, software on each measurement and control board monitors each battery parameter in real time; when the voltage of any battery reaches a preset maximum value or highest temperature value, charging is exited via the bypass circuit until the entire battery system reaches a shutdown voltage of the inverter; when the inverter shuts down or enters standby, the controller software reconnects the battery pack within a parameter range based on the battery parameters obtained from each measurement and control board, waiting for a next operational command;
in a discharging mode, the software on each measurement and control board monitors each battery parameter in real time; when the voltage of any battery reaches a preset minimum value or highest temperature value, discharging is exited via the bypass circuit until the entire battery system reaches the shutdown voltage of the inverter; when the inverter, or electrical device shuts down or enters standby, the controller software reconnects the battery pack within a parameter range based on the battery parameters obtained from each measurement and control board, waiting for a next operational command.

In the above charging and discharging method for energy storage, the step (2) specifically comprises:
carrying out initialization detection, comprising the following steps:
(A) a power supply provides power to the measurement and control board; the measurement and control board tests the battery, and if the battery parameters are qualified, it is connected to the battery pack; if the battery is not qualified: exceeding the set temperature, exceeding the set maximum voltage, falling below the set minimum voltage will result in a bypass of the battery pack after a 5-second delay, with the controller displaying a bypassed battery number and issuing an alarm;
(B) the power supply provides power to the controller: the controller powers on and detects a communication connection with the inverter or electrical device; if abnormal, it will issue an alarm; the controller detects a communication connection with each measurement and control board; if abnormal, it will issue an alarm; when the communication is normal, the controller sequentially issues commands to the measurement and control boards to extract battery parameters, continuously cycling;
(C) the power supply provides power to the inverter: the inverter powers on and performs a self-detection; if abnormal, it will issue an alarm, and under normal conditions, it will enter standby.

In the above charging and discharging method for energy storage, the step (4) involves a two-stage charging process, specifically:
(a) a first stage uses a high current rapid charging method; after a predetermined charging time, the battery system reaches the shutdown voltage of the inverter;
(b) when the inverter shuts down or enters standby, the controller software reconnects the battery pack within the parameter range based on the battery parameters obtained from each measurement and control boards, waiting for a second charging stage;
(c) the battery enters a sleep status for 25 minutes to allow the voltage to drop, while the inverter remains in standby for 25 minutes;
(d) the system proceeds to the second charging stage, with a charging current of DC5A; after a predetermined charging time, if the temperature or maximum voltage of any battery reaches the set parameters by the measurement and control board, the unit will bypass the battery and exit it from charging; when the controller obtains the parameters of the battery from the measurement and control board, it will display the battery bypass and related values; this process continues with batteries exiting charging until the battery system reaches the shutdown voltage of the inverter;
(e) when the inverter or charging equipment shuts down or enters standby, the controller software will reconnect the battery pack within the parameter range based on the battery parameters obtained from each measurement and control board, waiting for the next operational command.

In the above charging and discharging method for energy storage, during charging, when the software parameters set on the measurement and control board take precedence over battery warning software parameters, a highest temperature set by the measurement and control board will be a maximum operating temperature, a maximum voltage will be a maximum operating voltage, and a minimum voltage will be a minimum operating voltage; a highest temperature for battery warnings set in the controller will be a maximum alarm temperature, a maximum voltage will be a maximum alarm voltage, and a minimum voltage will be a minimum alarm voltage; a highest temperature for battery faults set in the controller will be a maximum shutdown temperature, a maximum voltage will be a maximum shutdown voltage, and a minimum voltage will be a minimum shutdown voltage; the relationships are as follows: the maximum operating voltage < the maximum alarm voltage < the maximum shutdown voltage, the highest operating temperature < the highest alarm temperature < the highest shutdown temperature, and the minimum operating voltage > the minimum alarm voltage > the minimum shutdown voltage;
when a temperature or maximum voltage of a certain battery reaches the parameters set by the measurement and control board, the unit will bypass the battery and exit it from charging the battery; when the controller obtains the parameters of the battery of the measurement and control board, it will display the battery bypass and related values; this process continues with batteries exiting until the battery system reaches the shutdown voltage of the inverter;
if a certain battery is bypassed and exited from charging not by the measurement and control board, but by reaching the battery warning parameters set in the controller software, and is bypassed by the controller software, an alarm will be triggered, indicating a fault alarm for a specific measurement and control board;
if a certain battery is bypassed and exited from charging not by the battery warning parameters in the controller software, but by reaching the battery fault parameters set in the controller software, the controller software will shut down the inverter, or charging equipment and issue a corresponding fault shutdown warning for the measurement and control board.

In the above charging and discharging method for energy storage, the step (4) involves a two-stage discharging process, specifically:
(a) a first stage uses a high current rapid discharging method; after a predetermined discharging time, the battery system reaches the shutdown voltage of the inverter;
(b) when the inverter or the electrical device shuts down or enters standby, the controller software reconnects the battery pack within the parameter range based on the battery parameters obtained from each measurement and control boards, waiting for a second discharging stage;
(c) the battery enters a sleep status for 30 minutes to allow the voltage to drop, while the inverter remains in standby for 30 minutes;
(d) the system proceeds to the second discharging stage, with a discharging current of DC5A; after a predetermined discharging time, if the temperature or minimum voltage of any battery reaches the set parameters by the measurement and control board, the unit will bypass the battery and exit it from discharging; when the controller obtains the parameters of the battery from the measurement and control board, it will display the battery bypass and related values; this process continues with batteries exiting discharging until the battery system reaches the shutdown voltage of the inverter;
(e) when the inverter or discharging equipment shuts down or enters standby, the controller software will reconnect the battery pack within the parameter range based on the battery parameters obtained from each measurement and control board, waiting for the next operational command.

In the above charging and discharging method for energy storage, during discharging, when the software parameters set on the measurement and control board take precedence over battery warning software parameters, a highest temperature set by the measurement and control board will be a maximum operating temperature, a maximum voltage will be a maximum operating voltage, and a minimum voltage will be a minimum operating voltage; a highest temperature for battery warnings set in the controller will be a maximum alarm temperature, a maximum voltage will be a maximum alarm voltage, and a minimum voltage will be a minimum alarm voltage; a highest temperature for battery faults set in the controller will be a maximum shutdown temperature, a maximum voltage will be a maximum shutdown voltage, and a minimum voltage will be a minimum shutdown voltage; the relationships are as follows: the maximum operating voltage < the maximum alarm voltage < the maximum shutdown voltage, the highest operating temperature < the highest alarm temperature < the highest shutdown temperature, and the minimum operating voltage > the minimum alarm voltage > the minimum shutdown voltage;
when a temperature or minimum voltage of a certain battery reaches the parameters set by the measurement and control board, the unit will bypass the battery and exit it from discharging the battery; when the controller obtains the parameters of the battery of the measurement and control board, it will display the battery bypass and related values; this process continues with batteries exiting until the battery system reaches the shutdown voltage of the inverter;
if a certain battery is bypassed and exited from discharging not by the measurement and control board, but by reaching the battery warning parameters set in the controller software, and is bypassed by the controller software, an alarm will be triggered, indicating a fault alarm for a specific measurement and control board; if a certain battery is bypassed and exited from discharging not by the battery warning parameters in the controller software, but by reaching the battery fault parameters set in the controller software, the controller software will shut down the inverter, or charging equipment and issue a corresponding fault shutdown warning for a specific measurement and control board.

In the above charging and discharging method for energy storage, a specific calculation method for the large current is as follows:
during charging, the set current = 0.9 * A / T * α, where A is a rated current of each battery cell, T is charging time (ranging from 2 to 7 hours), and α is a battery depreciation coefficient, with α ranging from 0.4 to 1.

In the charging and discharging method for energy storage, during charging, when the battery warning software parameters take precedence over the software parameters on the measurement and control board, a highest temperature set by the measurement and control board will be a secondary maximum operating temperature, a maximum voltage will be a secondary maximum operating voltage, and a minimum voltage will be a secondary minimum operating voltage;
a highest temperature for battery warnings set in the controller will be a primary maximum operating temperature, a maximum voltage will be a primary maximum operating voltage, and a minimum voltage will be a primary minimum operating voltage; the relationships are as follows: the primary maximum operating temperature < the secondary maximum operating temperature < the maximum shutdown temperature, the primary maximum operating voltage < the secondary maximum operating voltage < the maximum shutdown voltage, the primary minimum operating voltage > the secondary minimum operating voltage > the minimum shutdown voltage;
when a temperature or maximum voltage of a certain battery reaches the parameters set by the battery warning, the battery warning will bypass the battery and exit it from charging the battery; the controller will display the battery bypass and related values; this process continues with batteries exiting until the battery system reaches the shutdown voltage of the inverter; if a certain battery is bypassed and exited from charging not by the battery warning, but by reaching the parameters set by the measurement and control board, it will be bypassed by the measurement and control board; if a certain battery is bypassed and exited from charging not by the measurement and control board, but by reaching the battery fault parameters set in the controller software, the controller software will shut down the inverter, and issue a corresponding fault shutdown warning for a specific measurement and control board.

In the above charging and discharging method for energy storage, during discharging, when the battery warning software parameters take precedence over the software parameters on the measurement and control board, a highest temperature set by the measurement and control board will be a secondary maximum operating temperature, a maximum voltage will be a secondary maximum operating voltage, and a minimum voltage will be a secondary minimum operating voltage;
a highest temperature for battery warnings set in the controller will be a primary maximum operating temperature, a maximum voltage will be a primary maximum operating voltage, and a minimum voltage will be a primary minimum operating voltage; the relationships are as follows: the primary maximum operating temperature < the secondary maximum operating temperature < the maximum shutdown temperature, the primary maximum operating voltage < the secondary maximum operating voltage < the maximum shutdown voltage, the primary minimum operating voltage > the secondary minimum operating voltage > the minimum shutdown voltage;
when a temperature or minimum voltage of a certain battery reaches the parameters set by the battery warning, the battery warning will bypass the battery and exit it from discharging the battery; the controller will display the battery bypass and related values; this process continues with batteries exiting until the battery system reaches the shutdown voltage of the inverter; if a certain battery is bypassed and exited from discharging not by the battery warning, but by reaching the parameters set by the measurement and control board, it will be bypassed by the measurement and control board; if a certain battery is bypassed and exited from discharging not by the measurement and control board, but by reaching the battery fault parameters set in the controller software, the controller software will shut down the inverter, and issue a corresponding fault shutdown warning for a specific measurement and control board.

In the above charging and discharging method for energy storage, after a round of discharging and charging is completed, the system will automatically analyze the current performance parameters of the batteries collected by the controller; if a certain battery reaches the minimum voltage during its first discharge and exits the discharging system prematurely, and if the charging time for this battery to reach the maximum voltage and exit the system is only 20%-35% of the shutdown time when the inverter reaches the shutdown voltage, or if a certain battery exits the system early due to reaching the highest operating temperature during the charging and discharging processes, this battery will be marked; if this battery is marked continuously five times, it will be deemed to have poor performance and will need to be replaced, triggering an alarm prompt from the controller to replace this battery.

After adopting the aforementioned technical solutions, this invention builds a clever hardware system, which allows the measurement and control board to be locally connected to the corresponding battery; this not only saves a significant amount of wiring costs, but also allows the measurement and control board to obtain the maximum voltage, minimum voltage, and highest temperature of the corresponding battery during operation; within a single charging or discharging cycle, it can independently issue a one-time bypass command for the corresponding battery based on preset voltage and temperature, thereby efficiently and safely achieving the first level of protection.

At the same time, the controller receives battery voltage and temperature feedback from the measurement and control board, which is used for data collection and analysis, as well as for monitoring whether the measurement and control board is functioning normally; if the measurement and control board fails to act, causing the battery voltage or temperature to reach the preset maximum or minimum warning voltage or high temperature set by the controller, the controller will issue a warning. This implements the second level of protection for the system. Furthermore, when the switch of the measurement and control board malfunctions and fails to execute the bypass command, leading the battery to reach the highest temperature, maximum voltage, or minimum voltage predefined for battery faults within the controller, the controller will enforce the relationship across the entire system, thus achieving the third level of protection for the system.

Compared with the prior art, the invention also has the following advantageous effects:
(1) each battery is independently controlled; during charging, batteries that are full will exit first; during discharging, batteries that are depleted will exit first; this effectively prevents overcharging and over-discharging, avoiding the "bottleneck effect" effect and increasing the charge and discharge capacity by at least 10%.
(2) Independent control can prevent thermal runaway caused by overcharging or over-discharging of individual batteries.
(3) There is no requirement for battery consistency; the internal resistance, capacity, and other technical parameters of the batteries in the same system are unrestricted; multiple types of batteries can be used together without the need for testing, dismantling, or reconfiguring the batteries, greatly reducing the upfront processing costs before battery reuse.

### Brief Description of Accompanying Drawings

The invention will be further described in detail below with reference to the embodiments shown in the accompanying drawings, but this does not constitute any limitation on the invention.

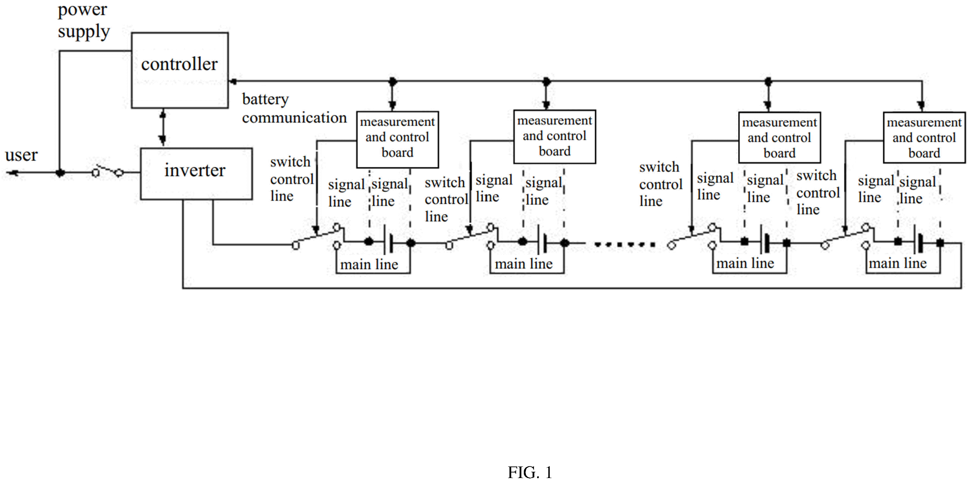

FIG. 1 is a schematic diagram of the hardware system of the invention.

### Specific Embodiment of the invention

### Embodiment 1

Referring to FIG. 1, a charging and discharging method for energy storage, comprising the following steps:
(1) setting up a hardware system
① installing a measurement and control board on each battery to directly detect the corresponding battery's voltage and temperature;
② installing an automatic switching element and a bypass circuit that works in conjunction with each battery on a main line between two adjacent batteries;
③ connecting communication lines of each measurement and control board in parallel, and then connecting them to a controller, the controller is connected to an inverter;
(2) carrying out initialization detection to ensure that each hardware device is in a normal state; comprising the following steps:
(A) a power supply provides power to the measurement and control board; the measurement and control board tests the battery, and if the battery parameters are qualified, it is connected to the battery pack; if the battery is not qualified: exceeding the set temperature, exceeding the set maximum voltage, falling below the set minimum voltage will result in a bypass of the battery pack after a 5-second delay, with the controller displaying a bypassed battery number and issuing an alarm;
(B) the power supply provides power to the controller: the controller powers on and detects a communication connection with the inverter or electrical device; if abnormal, it will issue an alarm; the controller detects a communication connection with each measurement and control board; if abnormal, it will issue an alarm; when the communication is normal, the controller sequentially issues commands to the measurement and control boards to extract battery parameters, continuously cycling;
(C) the power supply provides power to the inverter: the inverter powers on and performs a self-detection; if abnormal, it will issue an alarm, and under normal conditions, it will enter standby.
(3) setting up a software system
(a) setting an address code of the measurement and control board as the identification number for the corresponding battery;
(b) setting parameters for the measurement and control board: maximum temperature, maximum voltage, and minimum voltage during battery operation; the measurement and control board reads relevant battery parameters and compares them with set data to make corresponding actions; during operation, the measurement and control board has bypass permissions only, with no connection permissions; in this way, effective and independent rapid control of each battery can be achieved, while also avoiding system chaos caused by unauthorized access. This forms a strong first layer of protection for the system.
(c) setting controller software parameters: AC parameters, DC parameters, maximum temperature, maximum voltage, and minimum voltage during battery warnings, as well as maximum temperature, maximum voltage, and minimum voltage during battery faults;
(4) during standby or working, the controller reads battery parameters of each measurement and control board in turn and compares set data to make corresponding actions;
the charging involves a two-stage charging process, specifically:
(a) a first stage uses a high current rapid charging method; after a predetermined charging time, the battery system reaches the shutdown voltage of the inverter;
(b) when the inverter shuts down or enters standby, the controller software reconnects the battery pack within the parameter range based on the battery parameters obtained from each measurement and control boards, waiting for a second charging stage;
(c) the battery enters a sleep status for 25 minutes to allow the voltage to drop, while the inverter remains in standby for 25 minutes;
(d) the system proceeds to the second charging stage, with a charging current of DC5A; after a predetermined charging time, if the temperature or maximum voltage of any battery reaches the set parameters by the measurement and control board, the unit will bypass the battery and exit it from charging; when the controller obtains the parameters of the battery from the measurement and control board, it will display the battery bypass and related values; this process continues with batteries exiting charging until the battery system reaches the shutdown voltage of the inverter;
(e) when the inverter or charging equipment shuts down or enters standby, the controller software will reconnect the battery pack within the parameter range based on the battery parameters obtained from each measurement and control board, waiting for the next operational command.

A specific calculation method for the large current is as follows:
during charging, the set current = 0.9 * A / T * α, where A is a rated current of each battery cell, T is charging time (ranging from 2 to 7 hours), and α is a battery depreciation coefficient, with α ranging from 0.4 to 1.
during charging, when the software parameters set on the measurement and control board take precedence over battery warning software parameters, a highest temperature set by the measurement and control board will be a maximum operating temperature, a maximum voltage will be a maximum operating voltage, and a minimum voltage will be a minimum operating voltage; a highest temperature for battery warnings set in the controller will be a maximum alarm temperature, a maximum voltage will be a maximum alarm voltage, and a minimum voltage will be a minimum alarm voltage; a highest temperature for battery faults set in the controller will be a maximum shutdown temperature, a maximum voltage will be a maximum shutdown voltage, and a minimum voltage will be a minimum shutdown voltage; the relationships are as follows: the maximum operating voltage < the maximum alarm voltage < the maximum shutdown voltage, the highest operating temperature < the highest alarm temperature < the highest shutdown temperature, and the minimum operating voltage > the minimum alarm voltage > the minimum shutdown voltage;
when a temperature or maximum voltage of a certain battery reaches the parameters set by the measurement and control board, the unit will bypass the battery and exit it from charging the battery; when the controller obtains the parameters of the battery of the measurement and control board, it will display the battery bypass and related values; this process continues with batteries exiting until the battery system reaches the shutdown voltage of the inverter;
if a certain battery is bypassed and exited from charging not by the measurement and control board, but by reaching the battery warning parameters set in the controller software, and is bypassed by the controller software, an alarm will be triggered, indicating a fault alarm for a specific measurement and control board; this is a second level of protection for the system.
if a certain battery is bypassed and exited from charging not by the battery warning parameters in the controller software, but by reaching the battery fault parameters set in the controller software, the controller software will shut down the inverter, or charging equipment and issue a corresponding fault shutdown warning for the measurement and control board; this is a third level of protection for the system.

The discharging involves a two-stage discharging process, specifically:
(a) a first stage uses a high current rapid discharging method; after a predetermined discharging time, the battery system reaches the shutdown voltage of the inverter;
(b) when the inverter or electrical device shuts down or enters standby, the controller software reconnects the battery pack within the parameter range based on the battery parameters obtained from each measurement and control boards, waiting for a second discharging stage;
(c) the battery enters a sleep status for 30 minutes to allow the voltage to drop, while the inverter remains in standby for 30 minutes;
(d) the system proceeds to the second discharging stage, with a discharging current of DC5A; after a predetermined discharging time, if the temperature or minimum voltage of any battery reaches the set parameters by the measurement and control board, the unit will bypass the battery and exit it from discharging; when the controller obtains the parameters of the battery from the measurement and control board, it will display the battery bypass and related values; this process continues with batteries exiting discharging until the battery system reaches the shutdown voltage of the inverter;
(e) when the inverter or discharging equipment shuts down or enters standby, the controller software will reconnect the battery pack within the parameter range based on the battery parameters obtained from each measurement and control board, waiting for the next operational command.

During discharging, when the software parameters set on the measurement and control board take precedence over battery warning software parameters, a highest temperature set by the measurement and control board will be a maximum operating temperature, a maximum voltage will be a maximum operating voltage, and a minimum voltage will be a minimum operating voltage; a highest temperature for battery warnings set in the controller will be a maximum alarm temperature, a maximum voltage will be a maximum alarm voltage, and a minimum voltage will be a minimum alarm voltage; a highest temperature for battery faults set in the controller will be a maximum shutdown temperature, a maximum voltage will be a maximum shutdown voltage, and a minimum voltage will be a minimum shutdown voltage; the relationships are as follows: the maximum operating voltage < the maximum alarm voltage < the maximum shutdown voltage, the highest operating temperature < the highest alarm temperature < the highest shutdown temperature, and the minimum operating voltage > the minimum alarm voltage > the minimum shutdown voltage;
if the temperature or minimum voltage of any battery reaches the set parameters by the measurement and control board, the unit will bypass the battery and exit it from discharging; when the controller obtains the parameters of the battery from the measurement and control board, it will display the battery bypass and related values; this process continues with batteries exiting discharging until the battery system reaches the shutdown voltage of the inverter;
if a certain battery is bypassed and exited from discharging not by the measurement and control board, but by reaching the battery warning parameters set in the controller software, and is bypassed by the controller software, an alarm will be triggered, indicating a fault alarm for a specific measurement and control board; if a certain battery is bypassed and exited from discharging not by the battery warning parameters in the controller software, but by reaching the battery fault parameters set in the controller software, the controller software will shut down the inverter and issue a corresponding fault shutdown warning for a specific measurement and control board. Discharge, like charging, has three levels of protection.

More preferably, after a round of discharging and charging is completed, the system will automatically analyze the current performance parameters of the batteries collected by the controller; if a certain battery reaches the minimum voltage during its first discharge and exits the discharging system prematurely, and if the charging time for this battery to reach the maximum voltage and exit the system is only 20%-35% of the shutdown time when the inverter reaches the shutdown voltage, or if a certain battery exits the system early due to reaching the highest operating temperature during the charging and discharging processes, this battery will be marked; if this battery is marked continuously five times, it will be deemed to have poor performance and will need to be replaced, triggering an alarm prompt from the controller to replace this battery. The battery must be fully discharged before recharging in order to accurately assess its performance.

When the system is operating normally, users can set a specific day each month as the battery performance report generation date. The system will automatically generate a performance report for all batteries on the specified date, allowing users to understand the status of the batteries within the system.

Based on independent control of the batteries, each battery can be monitored and replaced individually, greatly enhancing the utilization of the batteries.

### Embodiment 2

A charging and discharging method for energy storage provided by the invention has the same hardware structure as that of Embodiment 1, the difference being in the software system settings:
during charging, when the battery warning software parameters take precedence over the software parameters on the measurement and control board, a highest temperature set by the measurement and control board will be a secondary maximum operating temperature, a maximum voltage will be a secondary maximum operating voltage, and a minimum voltage will be a secondary minimum operating voltage;
a highest temperature for battery warnings set in the controller will be a primary maximum operating temperature, a maximum voltage will be a primary maximum operating voltage, and a minimum voltage will be a primary minimum operating voltage; the relationships are as follows: the primary maximum operating temperature < the secondary maximum operating temperature < the maximum shutdown temperature, the primary maximum operating voltage < the secondary maximum operating voltage < the maximum shutdown voltage, the primary minimum operating voltage > the secondary minimum operating voltage > the minimum shutdown voltage.

When a temperature or maximum voltage of a certain battery reaches the parameters set by the battery warning, the battery warning will bypass the battery and exit it from charging the battery; the controller will display the battery bypass and related values; this process continues with batteries exiting until the battery system reaches the shutdown voltage of the inverter; if a certain battery is bypassed and exited from charging not by the battery warning, but by reaching the parameters set by the measurement and control board, it will be bypassed by the measurement and control board; if a certain battery is bypassed and exited from charging not by the measurement and control board, but by reaching the battery fault parameters set in the controller software, the controller software will shut down the inverter, and issue a corresponding fault shutdown warning for a specific measurement and control board.

During discharging, when the battery warning software parameters take precedence over the software parameters on the measurement and control board, a highest temperature set by the measurement and control board will be a secondary maximum operating temperature, a maximum voltage will be a secondary maximum operating voltage, and a minimum voltage will be a secondary minimum operating voltage;
a highest temperature for battery warnings set in the controller will be a primary maximum operating temperature, a maximum voltage will be a primary maximum operating voltage, and a minimum voltage will be a primary minimum operating voltage; the relationships are as follows: the primary maximum operating temperature < the secondary maximum operating temperature < the maximum shutdown temperature, the primary maximum operating voltage < the secondary maximum operating voltage < the maximum shutdown voltage, the primary minimum operating voltage > the secondary minimum operating voltage > the minimum shutdown voltage;
when a temperature or minimum voltage of a certain battery reaches the parameters set by the battery warning, the battery warning will bypass the battery and exit it from discharging the battery; the controller will display the battery bypass and related values; this process continues with batteries exiting until the battery system reaches the shutdown voltage of the inverter; if a certain battery is bypassed and exited from discharging not by the battery warning, but by reaching the parameters set by the measurement and control board, it will be bypassed by the measurement and control board; if a certain battery is bypassed and exited from discharging not by the measurement and control board, but by reaching the battery fault parameters set in the controller software, the controller software will shut down the inverter, and issue a corresponding fault shutdown warning for a specific measurement and control board.

This embodiment differs from Embodiment 1 in that the battery warning software parameters set within the controller take precedence over the software parameters on the measurement and control board; when the battery temperature reaches the maximum operating temperature, an instruction from the controller will bypass that battery and remove it from the system. Compared with the three-level protection in Embodiment 1, this embodiment only has two levels of protection, as both the primary and secondary maximum temperatures and maximum voltages can only be used for bypassing the battery and cannot distinguish whether the battery was bypassed due to a fault in the measurement and control board or because it reached the preset parameters. Therefore, the primary and secondary maximum temperatures and maximum voltages can only serve as a coordinated first-level protection, while the battery fault parameters in the controller, i.e., the shutdown parameters, serve as the second-level protection. At the same time, theoretically, it can also achieve independent control of each battery, but the drawback is that the response is slower and it is relatively easier to make errors compared with Embodiment 1.

The above embodiments are preferred embodiments of the invention and are used only to facilitate the illustration of the invention. They are not intended to limit the invention in any way. Any equivalent embodiments made by those skilled in the art, utilizing the technical content provided in the invention with partial modifications or alterations, without departing from the technical features of the present invention, shall still fall within the scope of the technical features of the invention.

## Claims

1. A charging and discharging method for energy storage, comprising the following steps:
(1) setting up a hardware system
① installing a measurement and control board on each battery to directly detect the corresponding battery's voltage and temperature;
② installing an automatic switching element and a bypass circuit that works in conjunction with each battery on a main line between two adjacent batteries;
③ connecting communication lines of each measurement and control board in parallel, and then connecting them to a controller, the controller is connected to an inverter;
(2) carrying out initialization detection to ensure that each hardware device is in a normal state;
(3) setting up a software system
(a) setting an address code of the measurement and control board as the identification number for the corresponding battery;
(b) setting parameters for the measurement and control board: maximum temperature, maximum voltage, and minimum voltage during battery operation; the measurement and control board reads relevant battery parameters and compares them with set data to make corresponding actions; during operation, the measurement and control board has bypass permissions only, with no connection permissions;
(c) setting controller software parameters: AC parameters, DC parameters, maximum temperature, maximum voltage, and minimum voltage during battery warnings, as well as maximum temperature, maximum voltage, and minimum voltage during battery faults;
(4) during standby or working, the controller reads battery parameters of each measurement and control board in turn and compares set data to make corresponding actions;
in a charging mode, software on each measurement and control board monitors each battery parameter in real time; when the voltage of any battery reaches a preset maximum value or highest temperature value, charging is exited via the bypass circuit until the entire battery system reaches a shutdown voltage of the inverter; when the inverter shuts down or enters standby, the controller software reconnects the battery pack within a parameter range based on the battery parameters obtained from each measurement and control board, waiting for a next operational command;
in a discharging mode, the software on each measurement and control board monitors each battery parameter in real time; when the voltage of any battery reaches a preset minimum value or highest temperature value, [1]charging is exited via the bypass circuit until the entire battery system reaches the shutdown voltage of the inverter; when the inverter or electrical device shuts down or enters standby, the controller software reconnects the battery pack within a parameter range based on the battery parameters obtained from each measurement and control board, waiting for a next operational command.

2. The charging and discharging method for energy storage of claim 1, wherein the step (2) specifically comprises:
carrying out initialization detection, comprising the following steps:
(A) a power supply provides power to the measurement and control board; the measurement and control board tests the battery, and if the battery parameters are qualified, it is connected to the battery pack; if the battery is not qualified: exceeding the set temperature, exceeding the set maximum voltage, falling below the set minimum voltage will result in a bypass of the battery pack after a 5-second delay, with the controller displaying a bypassed battery number and issuing an alarm;
(B) the power supply provides power to the controller: the controller powers on and detects a communication connection with the inverter or electrical device; if abnormal, it will issue an alarm; the controller detects a communication connection with each measurement and control board; if abnormal, it will issue an alarm; when the communication is normal, the controller sequentially issues commands to the measurement and control boards to extract battery parameters, continuously cycling;
(C) the power supply provides power to the inverter: the inverter powers on and performs a self-detection; if abnormal, it will issue an alarm, and under normal conditions, it will enter standby.

3. The charging and discharging method for energy storage of claim 1, wherein the step (4) involves a two-stage charging process, specifically:
(a) a first stage uses a high current rapid charging method; after a predetermined charging time, the battery system reaches the shutdown voltage of the inverter;
(b) when the inverter shuts down or enters standby, the controller software reconnects the battery pack within the parameter range based on the battery parameters obtained from each measurement and control boards, waiting for a second charging stage;
(c) the battery enters a sleep status for 25 minutes to allow the voltage to drop, while the inverter remains in standby for 25 minutes;
(d) the system proceeds to the second charging stage, with a charging current of DC5A; after a predetermined charging time, if the temperature or maximum voltage of any battery reaches the set parameters by the measurement and control board, the unit will bypass the battery and exit it from charging; when the controller obtains the parameters of the battery from the measurement and control board, it will display the battery bypass and related values; this process continues with batteries exiting charging until the battery system reaches the shutdown voltage of the inverter;
(e) when the inverter or charging equipment shuts down or enters standby, the controller software will reconnect the battery pack within the parameter range based on the battery parameters obtained from each measurement and control board, waiting for the next operational command.

4. The charging and discharging method for energy storage of claim 1 or 3, wherein
during charging, when the software parameters set on the measurement and control board take precedence over battery warning software parameters, a highest temperature set by the measurement and control board will be a maximum operating temperature, a maximum voltage will be a maximum operating voltage, and a minimum voltage will be a minimum operating voltage; a highest temperature for battery warnings set in the controller will be a maximum alarm temperature, a maximum voltage will be a maximum alarm voltage, and a minimum voltage will be a minimum alarm voltage; a highest temperature for battery faults set in the controller will be a maximum shutdown temperature, a maximum voltage will be a maximum shutdown voltage, and a minimum voltage will be a minimum shutdown voltage; the relationships are as follows: the maximum operating voltage < the maximum alarm voltage < the maximum shutdown voltage, the highest operating temperature < the highest alarm temperature < the highest shutdown temperature, and the minimum operating voltage > the minimum alarm voltage > the minimum shutdown voltage;
when a temperature or maximum voltage of a certain battery reaches the parameters set by the measurement and control board, the unit will bypass the battery and exit it from charging the battery; when the controller obtains the parameters of the battery of the measurement and control board, it will display the battery bypass and related values; this process continues with batteries exiting until the battery system reaches the shutdown voltage of the inverter;
if a certain battery is bypassed and exited from charging not by the measurement and control board, but by reaching the battery warning parameters set in the controller software, and is bypassed by the controller software, an alarm will be triggered, indicating a fault alarm for a specific measurement and control board;
if a certain battery is bypassed and exited from charging not by the battery warning parameters in the controller software, but by reaching the battery fault parameters set in the controller software, the controller software will shut down the inverter, or charging equipment and issue a corresponding fault shutdown warning for the measurement and control board.

5. The charging and discharging method for energy storage of claim 1, wherein the step (4) involves a two-stage discharging process, specifically:
(a) a first stage uses a high current rapid discharging method; after a predetermined discharging time, the battery system reaches the shutdown voltage of the inverter;
(b) when the inverter or the electrical device shuts down or enters standby, the controller software reconnects the battery pack within the parameter range based on the battery parameters obtained from each measurement and control boards, waiting for a second discharging stage;
(c) the battery enters a sleep status for 30 minutes to allow the voltage to drop, while the inverter remains in standby for 30 minutes;
(d) the system proceeds to the second discharging stage, with a discharging current of DC5A; after a predetermined discharging time, if the temperature or minimum voltage of any battery reaches the set parameters by the measurement and control board, the unit will bypass the battery and exit it from discharging; when the controller obtains the parameters of the battery from the measurement and control board, it will display the battery bypass and related values; this process continues with batteries exiting discharging until the battery system reaches the shutdown voltage of the inverter;
(e) when the inverter or discharging equipment shuts down or enters standby, the controller software will reconnect the battery pack within the parameter range based on the battery parameters obtained from each measurement and control board, waiting for the next operational command.

6. The charging and discharging method for energy storage of claim 1 or 5, wherein
during discharging, when the software parameters set on the measurement and control board take precedence over battery warning software parameters, a highest temperature set by the measurement and control board will be a maximum operating temperature, a maximum voltage will be a maximum operating voltage, and a minimum voltage will be a minimum operating voltage; a highest temperature for battery warnings set in the controller will be a maximum alarm temperature, a maximum voltage will be a maximum alarm voltage, and a minimum voltage will be a minimum alarm voltage; a highest temperature for battery faults set in the controller will be a maximum shutdown temperature, a maximum voltage will be a maximum shutdown voltage, and a minimum voltage will be a minimum shutdown voltage; the relationships are as follows: the maximum operating voltage < the maximum alarm voltage < the maximum shutdown voltage, the highest operating temperature < the highest alarm temperature < the highest shutdown temperature, and the minimum operating voltage > the minimum alarm voltage > the minimum shutdown voltage;
when a temperature or [2]maximum voltage of a certain battery reaches the parameters set by the measurement and control board, the unit will bypass the battery and exit it from charging the battery; when the controller obtains the parameters of the battery of the measurement and control board, it will display the battery bypass and related values; this process continues with batteries exiting until the battery system reaches the shutdown voltage of the inverter;
if a certain battery is bypassed and exited from discharging not by the measurement and control board, but by reaching the battery warning parameters set in the controller software, and is bypassed by the controller software, an alarm will be triggered, indicating a fault alarm for a specific measurement and control board; if a certain battery is bypassed and exited from discharging not by the battery warning parameters in the controller software, but by reaching the battery fault parameters set in the controller software, the controller software will shut down the inverter or charging equipment and issue a corresponding fault shutdown warning for a specific measurement and control board.

7. The charging and discharging method for energy storage of claim 3, wherein a specific calculation method for the large current is as follows:
during charging, the set current = 0.9 * A / T * α, where A is a rated current of each battery cell, T is charging time (ranging from 2 to 7 hours), and α is a battery depreciation coefficient, with α ranging from 0.4 to 1.

8. The charging and discharging method for energy storage of claim 1 or 3, wherein
during charging, when the battery warning software parameters take precedence over the software parameters on the measurement and control board, a highest temperature set by the measurement and control board will be a secondary maximum operating temperature, a maximum voltage will be a secondary maximum operating voltage, and a minimum voltage will be a secondary minimum operating voltage;
a highest temperature for battery warnings set in the controller will be a primary maximum operating temperature, a maximum voltage will be a primary maximum operating voltage, and a minimum voltage will be a primary minimum operating voltage; the relationships are as follows: the primary maximum operating temperature < the secondary maximum operating temperature < the maximum shutdown temperature, the primary maximum operating voltage < the secondary maximum operating voltage < the maximum shutdown voltage, the primary minimum operating voltage > the secondary minimum operating voltage > the minimum shutdown voltage;
when a temperature or maximum voltage of a certain battery reaches the parameters set by the battery warning, the battery warning will bypass the battery and exit it from charging the battery; the controller will display the battery bypass and related values; this process continues with batteries exiting until the battery system reaches the shutdown voltage of the inverter; if a certain battery is bypassed and exited from charging not by the battery warning, but by reaching the parameters set by the measurement and control board, it will be bypassed by the measurement and control board; if a certain battery is bypassed and exited from charging not by the measurement and control board, but by reaching the battery fault parameters set in the controller software, the controller software will shut down the inverter, and issue a corresponding fault shutdown warning for a specific measurement and control board.

9. The charging and discharging method for energy storage of claim 1 or 5, wherein
during discharging, when the battery warning software parameters take precedence over the software parameters on the measurement and control board, a highest temperature set by the measurement and control board will be a secondary maximum operating temperature, a maximum voltage will be a secondary maximum operating voltage, and a minimum voltage will be a secondary minimum operating voltage;
a highest temperature for battery warnings set in the controller will be a primary maximum operating temperature, a maximum voltage will be a primary maximum operating voltage, and a minimum voltage will be a primary minimum operating voltage; the relationships are as follows: the primary maximum operating temperature < the secondary maximum operating temperature < the maximum shutdown temperature, the primary maximum operating voltage < the secondary maximum operating voltage < the maximum shutdown voltage, the primary minimum operating voltage > the secondary minimum operating voltage > the minimum shutdown voltage;
when a temperature or minimum voltage of a certain battery reaches the parameters set by the battery warning, the battery warning will bypass the battery and exit it from discharging the battery; the controller will display the battery bypass and related values; this process continues with batteries exiting until the battery system reaches the shutdown voltage of the inverter; if a certain battery is bypassed and exited from discharging not by the battery warning, but by reaching the parameters set by the measurement and control board, it will be bypassed by the measurement and control board; if a certain battery is bypassed and exited from discharging not by the measurement and control board, but by reaching the battery fault parameters set in the controller software, the controller software will shut down the inverter, and issue a corresponding fault shutdown warning for a specific measurement and control board.

10. The charging and discharging method for energy storage of claim 1 or 5, wherein after a round of discharging and charging is completed, the system will automatically analyze the current performance parameters of the batteries collected by the controller; if a certain battery reaches the minimum voltage during its first discharge and exits the discharging system prematurely, and if the charging time for this battery to reach the maximum voltage and exit the system is only 20%-35% of the shutdown time when the inverter reaches the shutdown voltage, or if a certain battery exits the system early due to reaching the highest operating temperature during the charging and discharging processes, this battery will be marked; if this battery is marked continuously five times, it will be deemed to have poor performance and will need to be replaced, triggering an alarm prompt from the controller to replace this battery.
